(19) Europäisches Patentamt / European Patent Office / Office européen des brevets

(11) **EP 2 071 754 B1**

(12) **EUROPEAN PATENT SPECIFICATION**

(45) Date of publication and mention
of the grant of the patent:
**10.02.2010   Bulletin 2010/06**

(51) Int Cl.:
*H04J 14/02* (2006.01)         *H04J 14/06* (2006.01)

(21) Application number: **07291477.3**

(22) Date of filing: **10.12.2007**

(54) **Polarization multiplexed optical OFDM**

Polarisationsmultiplexiertes optisches OFDM

OFDM optique multiplexé en polarisation

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**17.06.2009   Bulletin 2009/25**

(73) Proprietor: **Alcatel Lucent**
**75008 Paris (FR)**

(72) Inventors:
• **Bülow, Henning**
**70806 Kornwestheim (DE)**
• **Buchali, Fred**
**71336 Waiblingen (DE)**

(74) Representative: **Schmidt, Werner Karl et al**
**Alcatel-Lucent**
**Intellectual Property & Standards**
**70430 Stuttgart (DE)**

(56) References cited:
**US-A1- 2005 286 904**

• **EZRA IP, ALAN PAK TAO LAU, DANIEL J. F. BARROS, JOSEPH M. KAHN: "Coherent Detection in Optical Fiber Systems"[Online] 17 August 2007 (2007-08-17), pages 1-38, XP002478219 Optical Society of America Retrieved from the Internet: URL:http://www.stanford.edu/~wavelet/pubs/ Coherent_Detection_invited.pdf> [retrieved on 2008-04-25]**
• **W. SHIEH, X. YI, Y. MA, Y. TANG: "Theoretical and experimental study on PMD-supported transmission using polarization diversity in coherent optical OFDM systems" OPTICS EXPRESS, [Online] vol. 15, no. 16, 6 August 2007 (2007-08-06), XP002478220 Optical Societa of America Retrieved from the Internet: URL:http://www.opticsinfobase.org/> [retrieved on 2008-04-23]**
• **SHIEH W ET AL: "Polarisation mode dispersion mitigation in coherent optical orthogonal frequency division multiplexed systems" ELECTRONICS LETTERS, IEE STEVENAGE, GB, vol. 42, no. 17, 17 August 2006 (2006-08-17), pages 996-997, XP006027182 ISSN: 0013-5194**
• **DELAVAUX J-M P ET AL: "ALL-FIBRE OPTICAL HYBRID FOR COHERENT POLARISATION DIVERSITY RECEIVERS" ELECTRONICS LETTERS, IEE STEVENAGE, GB, vol. 26, no. 16, 2 August 1990 (1990-08-02), pages 1303-1305, XP000108224 ISSN: 0013-5194**

EP 2 071 754 B1

**Description**

The invention relates to a receiver for an optical OFDM (orthogonal frequency-division multiplexing) transmission system.

Moreover, the invention relates to a transmitter and a method for generating an OFDM signal as well as to an OFDM signal as such.

In fiber optics communications, two ways to detect the received light exist: direct detection and coherent detection. In direct detection based systems, the photodetector at the receiver is typically directly fed by on-off modulated light (NRZ or RZ) and the resulting current of the photodetector corresponds to the received optical power.

However, the photodetector does not respond to changes of the phase of the received signal as necessary for phase modulation schemes such as DPSK (differential phase-shift keying) or DQPSK (differential quadrature phase-shift keying). In case of such modulation schemes, coherent detection schemes are used. In coherent detection receivers, the received optical light is coherently superpositioned with a single-frequency optical local oscillator (LO) signal. In case of heterodyne detection, the current of the photodetector comprises a beat term having an frequency offset between the carrier frequency of the optical signal and the frequency of the LO signal. Alternatively, in case of homodyne detection, the carrier frequency of the received optical signal and the frequency of the LO signal coincide. Preferably, the polarization of the LO should be matched to the polarization of the received signal. Otherwise, the signal level of the photocurrent is reduced, thereby reducing the receiver performance. E.g., in case both polarizations are orthogonal to each other, the signal level is reduced to zero.

Coherent detection allows improving the sensitivity of the receiver and in some applications increasing the spectral efficiency of the transmission system. Further, in case of heterodyne detection, coherent detection enables to compensate optical distortions in the electrical domain.

A further approach to increase the spectral efficiency and to reduce the influence of optical distortions is the usage of OFDM (orthogonal frequency-division multiplexing). In OFDM transmission systems the bandwidth for transmission is split into a multiplicity of subchannels (e.g., 256 subchannels) instead of using a single broadband channel. Each subchannel is associated with a subcarrier at the mid-frequency of the subchannel, with each subcarrier being modulated by a conventional modulation scheme (e.g., quadrature phase-shift keying) at a low symbol rate instead of a high symbol rate in single carrier modulation systems. By using a high number of subcarriers, the frequency response characteristics of each subchannel becomes nearly ideal. Further, by selecting the frequency spacing of adjacent subcarriers to be an integer multiple of the symbol rate 1/T of each subchannel, the subcarriers become orthogonal and ideally adjacent modulated subcarriers do not interfere.

An OFDM signal is typically generated by means of an inverse fast-Fourier transform: Parallel data streams, each data stream corresponding to one subchannel, are mapped to parallel symbol streams using a specific modulation scheme (e.g., phase-shift keying - PSK, or quadrature amplitude modulation - QAM), and then fed to an IFFT-unit for performing an inverse fast Fourier-transform (IFFT). In the receiver, the process is reversed by feeding an FFT-unit performing a fast Fourier-transform (FFT).

OFDM has a high tolerance to optical distortions and requires only a reduced bandwidth, both being important aspects when transmitting 40 Gbit/s or even 100 Gbit/s via an infrastructure being built only for 10 Gbit/s transmission.

For OFDM, both direct detection OFDM and coherent detection OFDM are used. As indicated above, coherent detection requires measures to compensate for polarization mismatch between the polarization of the received optical signal and the polarization of the LO signal. Such compensation can be carried out by providing polarization diversity at the receiver, wherein the orthogonal polarization components are processed in two signal processing branches at the full data rate, although the received signal has only a single polarization. The requirements for the processing branches, in particular for the analog-to-digital converters (ADCs) in the receiver, increase when the data rate is increased.

The document "Coherent Detection in Optical Fiber Systems", Ezra Ip et al., August 17, 2007, Optical Society of America retrieved from http://www.stanford.edu/~wavelet/pubs/Coherent_Detection_invited.pdf discloses an optical dual-polarization downconverter. In the downconverter the LO laser is polarized at 45° relative to a polarization beam splitter. The received signal is separately demodulated by each LO component. This is done by means of two single-polarization downconverters in parallel. Moreover, this document discloses an optical dual-polarization OFDM transmission system, which is implemented by operating two OFDM transmitters and receivers in parallel.

US 2005/286904 A1 discloses a receiver for a polarization multiplexed optical signal. First, the received signal is received by a polarization divider which divides the signal into two orthogonally polarized signal parts. The polarized signal parts are routed to two optoelectric converters. The polarized signal parts are each converted into orthogonal components and send to a multidimensional filter. The filter recombines portions of the polarized components into reconstructed signals.

The document "Theoretical and experimental study on PMD-supported transmission using polarization diversity in coherent optical OFDM systems", W. Shieh et al., Optics Express, Vol. 15., No. 16, August 6, 2007 discloses an optical two-input two-output OFDM transmission system. At the transmitter side, the signals of two parallel OFDM transmitters are combined by a polarization beam combiner. At the receiver side, the received signal is split by a polarization beam splitter, with the two beams fed to two OFDM receivers.

The document "Polarization mode dispersion mitigation in coherent optical orthogonal frequency division multiplexed systems", W. Shie et al., Electronic Letters, IEE Stevenage, GB, Vol. 42, Nol. 17., August 17, 2006, pages 996-997 discloses a coherent optical OFDM receiver comprising a polarization-diversity detector which decomposes the received signal field into two orthogonal polarization components. The components are fed separately into a pair of balanced detectors.

The document "All-Fibre Optical Hybrid for Coherent Polarization Diversity Receivers", J.-M. P. Delavaux et al., Electronic Letters, IEE Stevenage, GB, Vol. 26., No. 16. August 2, 1990, pages 1303-1305 discloses an optical hybrid for coherent polarization diversity receivers.

It is an object of the present invention to provide an OFDM receiver using polarization diversity, which allows for increased data transmission capability or reduced requirements for the processing branches compared to conventional OFDM coherent detection receivers with polarization diversity. It is a further object of the invention to provide a transmitter and a method for generating an appropriate OFDM signal as well as to provide an appropriate OFDM signal as such.

These objects are achieved by the receiver, the transmitter, the method and the OFDM signal according to the independent claims.

A receiver for an optical OFDM transmission system is configured to receive a polarization multiplexed OFDM signal. Such polarization multiplexed OFDM signal has a first and a second component in at least overlapping frequency bands (in particular in the same frequency band) with the polarization of the first component being different from the polarization of the second component. Preferably, the polarizations of the first and second components are orthogonal.

The receiver comprises splitting means, e.g., a polarization beam splitter, for splitting the polarization multiplexed OFDM signal into a first optical wave and a second optical wave, with the polarization of the first optical wave being different from the polarization of the second optical wave. Preferably, both polarizations are orthogonal, e.g., in case of a TE wave mode (transverse electrical - having basically no electrical field in the direction of propagation) and TM wave mode (transverse magnetic - having basically no magnetic field in the direction of propagation) are used.

Further, first superpositioning means are provided for superpositioning the signal of the first optical wave with an optical local oscillator signal, thereby generating a first superpositioned signal. Also, second superpositioning means are provided for superpositioning the signal of the second optical wave with the optical local oscillator signal, thereby generating a second superpositioned signal. The receiver further comprises first optical-to-electrical converter means, e.g., a single or two photodiodes, for generating a first electrical signal based on the first superpositioned signal. Analogously, the receiver comprises second optical-to-electrical converter means, e.g., a single or two photodiodes, for generating a second electrical signal based on the second superpositioned signal. Moreover, the receiver comprises electrical regeneration means for regenerating the first component based on the first and second electrical signals and for regenerating the second component based on the first and second electrical signals.

Such receiver using polarization diversity and being configured to process a polarization multiplexed OFDM signal provides the advantage that the data transmission capacity may be doubled with only limited additional effort in the receiver compared to a conventional OFDM receiver with polarization diversity. However, the sensitivity of the receiver remains the same. Alternatively, in case of the same transmission capacity one may reduce the bandwidth of each of the OFDM signal components (e.g., reduce to the half bandwidth), thereby reducing the requirements for the processing branches of the receiver, in particular for the ADCs, and also reducing the requirements for the transmitter, e.g., for the digital-to-analog-converter (DAC) in the transmitter.

Further, in comparison to alternative polarization multiplexed transmission schemes as coherent QPSK realized with polarization multiplexed channels, polarization multiplexed OFDM results in reduced requirements for the ADCs in the receiver and the DACs in the transmitter.

Typically the polarization of the first optical wave is riot matched to the polarization of the first OFDM component and the polarization of the second optical wave is not matched to the polarization of the second OFDM component. The electrical regeneration means perform compensation of this polarization mismatch. Thus, the regeneration means (together with the splitting means) act as a polarization demultiplexer. In comparison to a pure optical solution for the polarization multiplexer using a polarization controller and subsequent splitting means, this electrical/optical solution provides the advantage that no optical polarization controller in front of the splitting means is needed. This reduces the costs of the receiver (which are mainly driven by the optical components).

The polarization demultiplexer is adjusted by an appropriate adaption scheme as will be explained later on.

According to a preferred embodiment, the first superpositioning means receive a first version of the optical local oscillator signal, the polarization of which being aligned with the polarization of the first optical wave. In addition, the second superpositioning means receive a second version of the optical local oscillator signal, the polarization of which being aligned with the polarization of the second optical wave.

The usage of aligned polarizations provides the advantage that the first and second electrical signals, as generated by the optical-to-electrical converter means, have maximum signal amplitude, thereby increasing the receiver sensitivity.

According to a preferred embodiment, the receiver also provides phase diversity to obtain inphase and quadrature components of the first and second electrical signal. Therefore, preferably, the first superpositioning means are configured to separately superimpose the signal of the first optical wave with two orthogonal phases of the optical local oscillator signal. This may be realized by providing a 3-dB coupler (90° hybrid). Analogously, the second superpositioning means are configured to separately superimpose the signal of the second optical wave with two orthogonal phases of the optical local oscillator signal.

The first optical-to-electrical converter means comprises two photodetectors, generating inphase and quadrature components of the first electrical signal. Analogously, the second optical-to-electrical converter means comprises two photodetectors, generating inphase and quadrature components of the second electrical signal.

Advantageously, the electrical regeneration means comprise first combining means for weightedly combining of the first and second electrical signals, with the weighting being adjustable. Alternatively, in case the combining is performed later in the signal path, e.g., after the FFT-unit, other signals being dependent on the first and second electrical signals may be combined. Analogously, the electrical regeneration means comprise second combining means for weightedly combining of the first and second electrical signals or of signals being dependent thereon, with the weighting being adjustable.

By appropriate weightedly combining of the first and second electrical signals, the two OFDM components are regenerated.

It should be noted that the term "weightedly combining" does not necessarily mean that both signals are weighted before combining, it least one signal is weighted. However, preferably both signals are weighted before combining.

In case of inphase and quadrature components, both the first and second combining means are configured to weightedly combine the inphase components of the first and second electrical signals and to weightedly combine the quadrature components of the first and second electrical signals.

The regeneration means may be realized as analog means configured for signal processing in the analog domain, e.g., as analog multipliers and analog adders.

Alternatively, the regeneration means may be realized as digital means configured for signal processing in the digital domain. In this case, the first and second electrical signals are converted to digital signals and the regenerations means may be realized by means of digital adders and digital multipliers. It should be noted that in case of a digital realization the regeneration means may be realized upstream of the FFT-unit for regeneration in the time domain or alternatively downstream of the FFT-unit for regeneration in the frequency domain, in particular using pilot carriers as explained below.

The invention relates inter alia to an adaption scheme for a polarization demultiplexer.

According to the invention, a receiver for an optical OFDM transmission system is configured to receive a polarization multiplexed OFDM signal. The polarization multiplexed OFDM signal has a first and a second component in same frequency band, the polarization of the first component being different from the polarization of the second component (e.g., the polarizations are orthogonal). At least one subcarrier of the second component at a first frequency is omitted, whereas the first component comprises a subcarrier at this first frequency (or vice versa). Preferably, the subcarrier of the first component at the first frequency is a pilot subcarrier having a pilot signal, which is known to the receiver.

The receiver comprises splitting means for splitting the OFDM signal into a first optical wave and a second optical wave, with the polarization of the first optical wave being different from the polarization of the second optical wave. Further, the receiver comprises adjustable compensation means for compensating polarization mismatch between the polarizations of the optical waves and of the components. This may be realized by providing a polarization controller upstream of the means for splitting the OFDM signal. Alternatively, electrical regeneration means as discussed above may be used. Further, the receiver comprises adjusting means for adjusting the adjustable compensation based on the received signal at the first frequency, i.e. the measured signal at the first frequency is used for adjusting the compensation means, thereby compensating polarization mismatch.

Preferably, the adjusting means are configured to maximize the received subcarrier at the first frequency, thereby compensating polarization mismatch.

According to a preferred embodiment, also at least one subcarrier of the first component at a second frequency is omitted, whereas the second component comprises a subcarrier at this second frequency. This allows for independent adjustment of the polarization compensation for the two OFDM components.

Preferably, the magnitude of the subcarrier of the first component at the first frequency is different to the magnitude of other subcarriers of the first component. This allows to mark this subcarrier and thus to identify this subcarrier at the receiver. The magnitude is preferably higher than the magnitude of other subcarriers of the first component, thereby increasing the signal-to-noise ratio of this subcarrier, thus improving the polarization compensation based on this subcarrier.

In case of using one or more pilot subcarriers, the pilot subcarriers may be also used to control the equalization of the received signal, e.g., to compensate for chromatic dispersion.

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e., the claims can be basically combined in any order.

Further aspects of the invention relate to a transmitter and a method for generating such polarization multiplexed OFDM signal as well as to said polarization multiplexed OFDM signal as such.

The above remarks related to the receivers and its preferred embodiments are basically also applicable to the transmitter, the method and the OFDM signal.

The invention is explained below in an exemplary manner with reference to the accompanying drawings, wherein

Fig. 1    illustrates a first embodiment of the inventive receiver;

Fig. 2    illustrates a second embodiment of the inventive receiver;

Fig. 3    illustrates a third embodiment of the inventive receiver;

Fig. 4    illustrates a fourth embodiment of the inventive receiver; and

Fig. 5    illustrates an embodiment of the inventive polarization multiplexed OFDM signal.

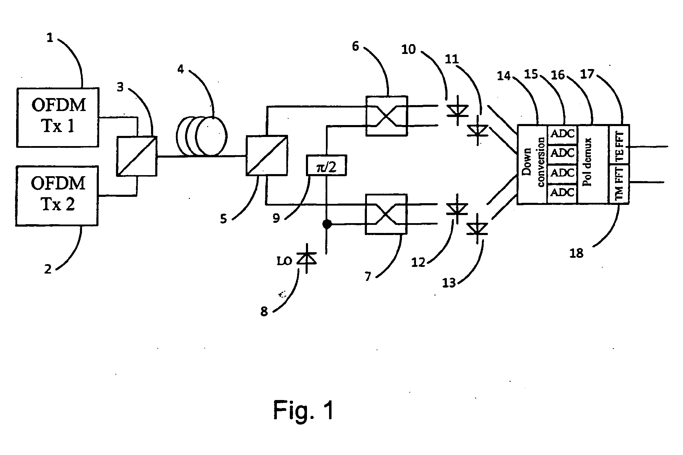

Fig. 1 shows a first embodiment of the inventive receiver as part of a polarization multiplexed optical OFDM (PM-OFDM) transmission system. The PM-OFDM transmitter forms a two-part transmitter, having a first transmitter part 1 and a second transmitter part 2. Each of the transmitter parts 1 and 2 generates an optical OFDM signal having a plurality of subcarriers, at least some of the subcarriers being modulated by data. Both OFDM signals are located in the same frequency or wavelength range. The frequencies of the subcarriers of the transmitter part 1 correspond to the frequencies of the subcarriers of the transmitter part 2. The polarizations of both OFDM signals are orthogonal, e.g., the OFDM signal of the first transmitter part 1 has a TE polarization, whereas the OFDM signal of the second transmitter part 2 has a TM polarization. Preferably, the OFDM symbols of the two OFDM signals are synchronized.

The two OFDM signals are multiplexed by means of a polarization beam combiner 3 or a device having an equivalent functionality, thereby generating a combined PM-OFDM signal, having two components corresponding to the two OFDM signals. After transmission via an optical fiber 4, PM-OFDM signal is received by a PM-OFDM receiver. The receiver comprises a polarization beam splitter 5, which splits the received optical signal into a first optical wave and a second optical wave, with the polarizations of the first and second optical waves being orthogonal, e.g., the first optical wave has a TE polarization, whereas the second optical wave has a TM polarization. Due to shifting of the polarization along the fiber, the signals of the first and second optical waves typically do not correspond to the first and second components of the transmitted signal, respectively. Therefore, the polarization mismatch of the optical waves and the components needs to be compensated as explained below.

The first output of the polarization beam splitter drives a first 3-dB coupler (90° hybrid) 6, whereas the second output drives a second 3-dB coupler (90° hybrid) 7. Each coupler is configured to superimpose the respective optical wave with an optical local oscillator (LO) signal, generated by a laser 8. The polarization of the LO signal at the input of the first coupler 6 corresponds to the polarization of the first optical wave, whereas the polarization of the LO signal at the input of the second coupler 7 corresponds to the polarization of the second optical wave. Since the polarization of the LO signal at the LO input of the second coupler 7 is aligned with the polarization of the second optical wave, a polarization shifter 9 is provided, which shifts the polarization by 90° and assures that the polarization at the LO input of the first coupler 6 is aligned with the polarization of the first optical wave (since the polarizations of both split optical waves are orthogonal).

Each of the couplers 6 and 7 is configured to separately superimpose the input signal with two (internally generated) orthogonal phases of the LO signal. The two output signals of the coupler 6 are fed to two photodetectors 10 and 11, e.g., two photodiodes, generating inphase and quadrature components of the downconverted signal. Analogously, the two output signals of the coupler 7 are fed to two photodetectors 12 and 13 generating inphase and quadrature components of the downconverted signal.

Please note that the couplers only add the received signal and the LO signal. The photodetectors actually carry out the mixing of the received signal and the LO signal since the photocurrent is proportional to the square of the superimposed fields. Further, it should be noted that the usage of quadrature downconversion is only facultative. Alternatively, only a single photodetector in the upper path and a single photodetector in the lower path may be used.

In case of a heterodyne receiver structure (as given in Fig.1), the carrier frequency (or carrier wavelength) of the received signal and the frequency of the LO signal are not identical, resulting in a frequency offset, which is compensated in a downconversion unit 14 comprising electrical mixers for downconversion. The downconversion may be carried out in the analog domain (i.e., located upstream of the analog-to-digital converters) or in the digital domain (i.e., located downstream of the analog-to-digital converters). In Fig. 1, the downconversion is realized in the analog domain. After analog-to-digital conversion in a block of ADCs 15 (here: four ADCs corresponding to the four photodiodes), the inphase and quadrature components are fed to electrical regeneration means 16 for regenerating the first component of the PM-OFDM signal based on the inphase and quadrature components of both the upper and lower paths. Further, the regeneration means regenerate the second component of the PM-OFDM signal based on the inphase and quadrature components of both the upper and lower paths. This is carried out by appropriate combining of the signals in the upper and lower paths as will be explained in more detail below. The regeneration means 16 (in combination with the polarization beam splitter 5) act as a polarization demultiplexer and will be referred to as a polarization demultiplexer in the following.

After regenerating the first and second components of the PM-OFDM signal, both components are fed to two FFT-units 17 and 18 for carrying out a fast-Fourier transform (FFT). E.g., the FFT-unit 17 is assigned to the first component, whereas the FFT-unit 18 is assigned to the second component. The FFT is the reverse of the IFFT at the transmitter and necessary for recovering the original signal.

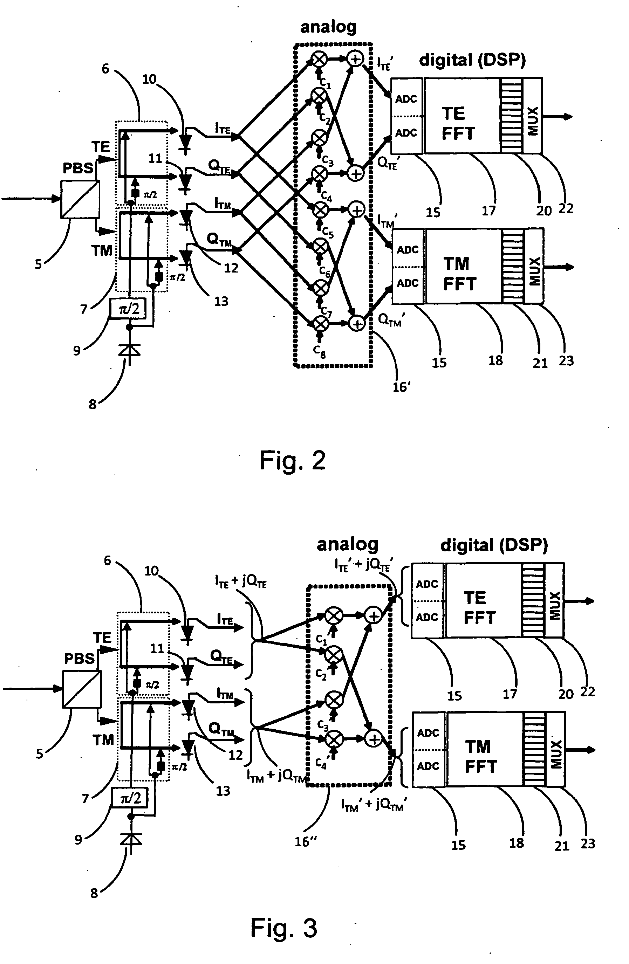

Fig. 2 shows a second embodiment of the inventive receiver. Figurative elements in Figs. 1 and 2 being denoted by the same reference signs are basically the same. In Fig. 2 the polarization demultiplexer 16' for regenerating the components of the PM-OFDM signals is realized in the analog domain.

Fig. 2 also shows the operating principle of the couplers 6 and 7. In the two arms of each coupler 6, 7 the respective optical wave is superimposed with orthogonal phases of the LO signal. In the lower arm of each coupler 6, 7 the respective optical wave is superimposed with the LO signal shifted by 90°, whereas in the upper arm of each coupler 6, 7 the respective optical wave is superimposed with the LO signal without phase shift. The combination of the polarization beam splitter and the two couplers is referred to as an optical hybrid.

After feeding the output signals of the coupler 6 to the two photodetectors 10 and 11, the inphase component $I_{TE}$ and the quadrature component $Q_{TE}$ of the downconverted signal are generated.

In simple terms, the inphase component $I_{TE}$ at the photodetector 10 is roughly characterized by the beat term:

$$\mathrm{Re}\left[E(t)E_{LO}\cdot e^{i(\omega-\omega_{LO})\cdot t}\right] \qquad .$$

E(t) describes the complex envelope of the received signal at the input of the coupler 6, corresponding to a superposition of the transmitted first and second signal components due to the polarization mismatch.

The quadrature component $Q_{TE}$ at the photodetector 11 is roughly characterized by the beat term:

$$\mathrm{Im}\left[E(t)E\cdot e^{i(\omega-\omega_{LO})\cdot t}\right] .$$

The inphase component $I_{TE}$ and the quadrature component $Q_{TE}$ form a complex signal.

After feeding the output signals of the coupler 7 to the two photodetectors 12 and 13, the inphase component $I_{TM}$ and the quadrature component $Q_{TM}$ are generated, which are roughly characterized by the following beat terms:

$$\mathrm{Re}\left[E'(t)E_{LO}\cdot e^{i(\omega-\omega_{LO})\cdot t}\right]$$

$$\mathrm{Im}\left[E'(t)E_{LO}\cdot e^{i(\omega-\omega_{LO})\cdot t}\right]$$

E'(t) describes the complex envelope of the received signal at the input of the coupler 7, corresponding to a superposition of the transmitted first and second signal components due to the polarization mismatch.

The polarization mismatch is corrected by the analog polarization demultiplexer 16'. The analog polarization demultiplexer 16' is configured to weightedly combine the inphase components $I_{TE}$, $I_{TM}$ of the upper and lower paths and to weightedly combine the quadrature components $Q_{TE}$, $Q_{TM}$ of the upper and lower paths. Therefore, the analog polarization demultiplexer 16' comprises a plurality of analog adders and multipliers (corresponding to taps) receiving

weights $c_i$. The weights $c_i$ are adjusted by a feedback control as discussed below.

The polarization demultiplexer 16' regenerates the inphase $I_{TE}$' and quadrature $Q_{TE}$' components of the signal of the first transmitter part 1. Further, the polarization demultiplexer 16' regenerates the inphase $I_{TM}$' and quadrature $Q_{TM}$' components of the signal of the second transmitter part 2.

The regenerated inphase and quadrature components $I_{TE}$', $Q_{TE}$', $I_{TM}$', $Q_{TM}$' at the output of the demultiplexer 16' are the result of the following operations of the analog demultiplexer 16':

$$I_{TE}\text{'}= c_1 \cdot I_{TE} + c_3 \cdot I_{TM}$$

$$Q_{TE}\text{'}= c_2 \cdot Q_{TE} + c_4 \cdot Q_{TM}$$

$$I_{TM}\text{'}= c_5 \cdot I_{TE} + c_7 \cdot I_{TM}$$

$$Q_{TE}\text{'}= c_6 \cdot Q_{TE} + c_8 \cdot Q_{TM}$$

In the following the determination of the weights $c_1$, $c_3$ for regenerating $I_{TE}$' is described in exemplary manner.

It is assumed that the inphase components $I_{TE}$ and $I_{TM}$ at the photodetectors 12 and 13 can be described as a linear superposition of the inphase component $I_{TE}$" of the first component of the PM-OFDM signal and the inphase component $I_{TM}$" of the second component of the PM-OFDM signal:

$$I_{TE} = (1-\alpha)\cdot I_{TE}\text{''}+ \alpha \cdot I_{TM}\text{''}$$

$$I_{TM} = \alpha \cdot I_{TE}\text{''}+ (1-\alpha)\cdot I_{TM}\text{''}$$

Based on this linear system, the inphase components $I_{TE}$" and $I_{TM}$" to be regenerated can be expressed as:

$$I_{TE}\text{''}= \frac{1-\alpha}{1-2\alpha}\cdot I_{TE} + \frac{-\alpha}{1-2\alpha}\cdot I_{TM}$$

By selecting the weights $c_1 := \dfrac{1-\alpha}{1-2\alpha}$ and $c_3 := \dfrac{-\alpha}{1-2\alpha}$, the output signal $I_{TE}$' of the analog demultiplexer 16' equals the inphase component $I_{TE}$" of the first component of the transmitted PD-OFDM signal. In a similar way, the other weights are selected such that the outputs signals $I_{TE}$', $Q_{TE}$', $I_{TM}$' and $Q_{TM}$' correspond to the respective inphase and quadrature components of the two polarization components of the transmitted PM-OFDM signal. Further, since the polarization mismatch affects the inphase and the quadrature components in the same way, some weights may be selected to be identical: $c_1 = c_2$; $c_3 = c_4$; $c_5 = c_6$; $c_7 = c_8$.

The four analog demultiplexed signal components $I_{TE}$', $Q_{TE}$', $I_{TM}$' and $Q_{TM}$' are fed into four ADCs 15 (optionally after downconversion, see Fig. 1). After analog-to-digital conversion the signals are processed in the digital domain. The signals are processed in two FFT-units 17 and 18 for carrying out a fast-Fourier transform (FFT), with the FFT-unit 17 and the FFT-unit 18 being assigned to the first component and second component, respectively. Thereafter, the parallel output streams related to the subchannels of the FFT-units 17 and 18 are equalized by a plurality of parallel subchannel equalizers 20 and 21. Then, the parallel subchannel signals in the upper and lower paths are multiplexed by a multiplexer 22 and a multiplexer 23, thereby generating the two original serial data streams as fed into the first 1 and second 2 transmitter parts.

The analog preprocessing in the receiver by the analog demultiplexer 16' means an optimum share of processing burden between what can be done effectively in the analog domain and what can be done in the digital (DSP) domain, thereby reducing the DSP effort. This is also valid for the further embodiments below.

Fig. 3 shows a third embodiment of the inventive receiver. Figurative elements in Figs. 2 and 3 being denoted by the same reference signs are basically the same. In Fig. 3, the signals $I_{TE}$ and $Q_{TE}$ of the photodetectors 10 and 11 are treated as a first complex-valued signal $I_{TE} + jQ_{TE}$ and the signals $I_{TM}$ and $Q_{TM}$ of the photodetectors 12 and 13 are treated as a second complex-valued signal $I_{TM} + jQ_{TM}$. The functionality of the analog demultiplexer 16" in Fig. 3 basically corresponds to the functionality of the analog demultiplexer 16' in Fig. 2, however, the signals are differently grouped, i.e. as complex signals. This may provide some realization advantages compared to the solution in Fig. 2.

Accordingly, the analog multipliers and adders of the multiplexer 16" are realized for performing operations on complex-valued signals. Thus, each of the complex adders in Fig. 3 comprises two adders in parallel for the inphase and the quadrature phase components, each for adding two real-valued signals. Also, each multiplier comprises two multipliers in parallel for the inphase and the quadrature phase components, each for multiplying the respective component with a real-valued weight $c_1'$. In this case, the weight $c_1'$ in Fig. 3 correspond to the weights $c_i$ in Fig. 2 as given hereafter: $c_1' := c_1 = c_2$; $c_2' := c_5 = c_6$; $c_3' := c_3 = c_4$; $c_4' := c_7 = c_8$.

However, the multipliers in Fig. 3 may be also realized to multiply the respective signal with a complex-valued weight $c_i$. In this case the multiplier is realized to perform the operation $(A + jB) \cdot (C + jD) = A \cdot C - B \cdot D + j \cdot (A \cdot D + B \cdot C)$,

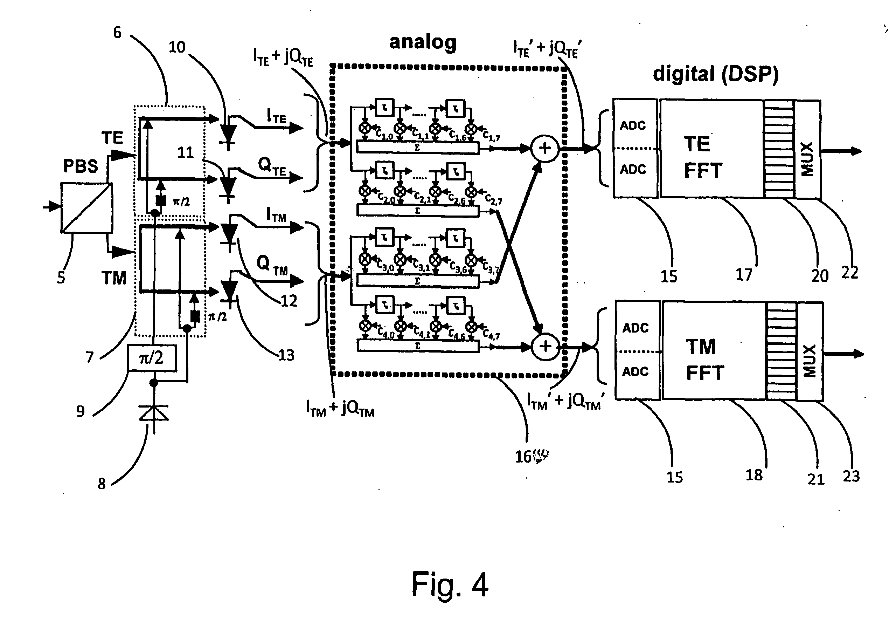

Fig. 4 illustrates a fourth embodiment of the inventive receiver. Figurative elements in Figs. 3 and 4 being denoted by the same reference signs are basically the same. In the analog demultiplexer 16''' in Fig. 4 the four multipliers of Fig. 3 are replaced by four feed-forward equalizers (FFE), each comprising an FIR (finite impulse response) filter having a plurality of delay elements (here: 7), a plurality of multipliers (here: 7) with weights $c_{i,0-7}$ and a summing unit.

When setting the weights $c_{i,0} := c_i'$ and $c_{i,2-7} := 0$, the function of the analog demultiplexer 16''' in Fig. 4 corresponds to the function of the analog demultiplexer 16" in Fig. 3. Furthermore, by using FIR filters having a frequency dependent transmission function, the polarization mismatch between the polarizations of the optical waves and of the components can be adapted in dependency of the frequency. This is advantageous since the shining of the polarization along the fiber is typically frequency dependent. Also, the FFEs provide the option to further equalize the received signal and to compensate for signal degeneration along the fiber, e.g., due to chromatic dispersion.

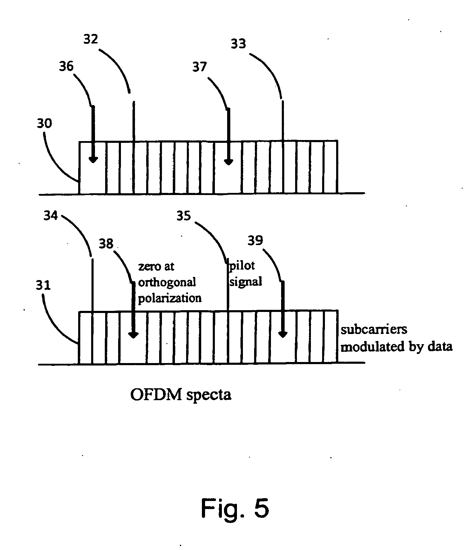

Fig. 5 illustrates the spectra of an embodiment of the inventive PM-OFDM signal having pilot subcarriers, the pilot subcarriers being used for adapting the compensation of the polarization mismatch.

The PM-OFDM signal comprises a first component 30 and a second component 31 in the same frequency bands, both components having a plurality of data modulated subcarriers. The polarization (e.g., TE mode) of the first component 30 is different from the polarization (e.g., TM mode) of the second component 31, in particular both polarizations are orthogonal. In the spectra, a few data subcarriers are omitted and pilot subcarriers 32, 33, 34 and 35 carrying pilot signals are placed at these frequencies.

Each pilot subcarrier 32, 33, 34 and 35 in the respective component corresponds to a missing subcarrier 36, 37, 38, 39 (zero) in the respective other component, i.e., each opposing subcarrier in the respective other component is omitted.

For adapting the digital or analog polarization demultiplexers 16, 16', 16" or 16''' in Figs. 1 to 4, the pilot subcarriers and the opposing zero are used. In the receiver, the regenerated subcarrier signals related to the pilot subcarriers are maximized and the signals related to the opposing zeros are minimized, i.e. controlled to become zero. This is carried out by measuring the corresponding signals in the frequency domains as generated by the FFT-units 17 and 18. The demultiplexers 16, 16', 16", 16''' in Figs. 1 to 4, more precisely the weights, are adjusted in such a way that the amplitude of the regenerated subcarriers signals relating to the pilot subcarriers is maximized in the corresponding respective receiver path, whereas the amplitude of the signals relating to the opposing zeros in the respective other path are minimized.

When assuming that the output of the upper TE-FFT-unit 17 in Figs. 1-4 is intended for processing the first component 30, the subcarrier signals as generated by the upper TE-FFT-unit 17 at the frequencies of the pilot subcarriers 32, 33 are maximized, whereas the signals at the frequencies of the zeros 36 and 37 are minimized. Analogously, when assuming that the output of the lower TM-FFT-unit 18 is intended for processing the first component 31, the subcarrier signals as generated by the lower TM-FFT-unit 18 at the frequencies of the pilot subcarriers 34, 35 are maximized, whereas the signals at the frequencies of the zeros 38 and 39 are minimized.

The usage of at least one pilot subcarrier in each component 30, 31, with the pilot subcarriers being located at different frequency positions, allows for independent optimization of the regeneration in the both paths.

As illustrated in Fig. 5, the magnitude of the pilot subcarriers 32, 33, 34 and 35 is higher than the magnitude of the data subcarriers. This allows to mark pilot subcarriers and thus to identify these subcarriers in the receiver. Further, the signal-to-noise ratio of the pilot subcarrier is higher, thereby improving the adaption of the polarization demultiplexer.

Alternatively, the magnitude of the pilot subcarriers may be lower than the magnitude of the data subcarriers.

The number (here: 4) of pilot subcarriers and their frequencies may be fixed or may be variable and dynamically adjusted.

**Claims**

1. A receiver for an optical OFDM transmission system,

   - the receiver being configured to receive a polarization multiplexed OFDM signal having a first (30) and a second (31) component in the same frequency band, the polarization of the first component (30) being different from the polarization of the second component (31), a subcarrier (38, 39) of the second component (31) at a first frequency being omitted and the first component (30) comprising a subcarrier (32, 33) at the first frequency,
   - wherein the receiver comprises:

      - splitting means (5) for splitting the OFDM signal into a first optical wave and a second optical wave, with the polarization of the first optical wave being different from the polarization of the second optical wave;
      - adjustable compensation means (16, 16', 16", 16''') for compensating polarization mismatch between the polarizations of the optical waves and of the components; and
      - adjusting means for adjusting the adjustable compensation means based on the received signal at the first frequency.

2. The receiver according to claim 1, wherein the adjusting means are configured to maximize the received subcarrier at the first frequency.

3. The receiver according to claim 1, wherein a subcarrier (36, 37) of the first component (30) at a second frequency is omitted and the second component (31) comprises a subcarrier (34, 35) at the second frequency.

4. The receiver according to claim 1,

   - wherein the receiver further comprises:

      - first superpositioning means (6) for superpositioning the signal of the first optical wave with an optical local oscillator signal, thereby generating a first superpositioned signal;
      - second superpositioning means (7) for superpositioning the signal of the second optical wave with the optical local oscillator signal, thereby generating a second superpositioned signal;
      - first optical-to-electrical converter means (10, 11) for generating a first electrical signal based on the first superpositioned signal;
      - second optical-to-electrical converter means (12, 13) for generating a second electrical signal based on the second superpositioned signal; and

   - wherein the adjustable compensation means (16, 16', 16", 16''') comprise:

      - first combining means for weightedly combining of the first and second electrical signals or for weightedly combining of signals being dependent thereon, with the weighting being adjusted by the adjusting means; and
      - second combining means for weightedly combining of the first and second electrical signals or for weightedly combining of signals being dependent thereon, with the weighting being adjusted by the adjusting means.

5. A transmitter (1, 2, 3) for an optical OFDM transmission system, the transmitter being configured to generate a polarization multiplexed OFDM signal having a first (30) and a second (31) component in the same frequency band, the polarization of the first component (30) being different from the polarization of the second component (31), **characterized in that** a subcarrier (38, 39) of the second component at a first frequency is omitted and the first component (30) comprises a subcarrier (32, 33) at the first frequency.

6. The transmitter according to claim 5, wherein the subcarrier (32, 33) of the first component (30) at the first frequency is a pilot subcarrier.

7. The transmitter according to claim 5, wherein a subcarrier (36, 37) of the first component (30) at a second frequency is omitted and the second component (31) comprises a subcarrier (34, 35) at the second frequency.

8. The transmitter according to claim 5, wherein the magnitude of the subcarrier (32, 33) of the first component (30) at the first frequency is different to the magnitude of other subcarriers of the first component (30).

9. A method for generating a polarization multiplexed OFDM signal having a first (30) and a second (31) component in the same frequency band, the polarization of the first component (30) being different from the polarization of the second component (31),
**characterized in that**
a subcarrier (38, 39) of the second component (31) at a first frequency is omitted and the first component (30) comprises a subcarrier (32, 33) at the first frequency.

10. The method according to claim 9, wherein the subcarrier (32, 33) of the first component (30) at the first frequency is a pilot subcarrier.

11. The method according to claim 9, wherein a subcarrier (36, 37) of the first component (30) at a second frequency is omitted and the second component (31) comprises a subcarrier (34, 35) at the second frequency.

12. The method according to claim 9, wherein the magnitude of the subcarrier (32, 33) of the first component (30) at the first frequency is different to the magnitude of other subcarriers of the first component (30).

13. A polarization multiplexed OFDM signal having a first (30) and a second (31) component in the same frequency band, the polarization of the first component (30) being different from the polarization of the second component (31),
**characterized in that**
a subcarrier (38, 39) of the second component (31) at a first frequency is omitted and the first component (30) comprises a subcarrier (32, 33) at the first frequency.

14. The signal according to claim 13, wherein the subcarrier (32, 33) of the first component (30) at the first frequency is a pilot subcarrier.

15. The signal according to claim 13, wherein a subcarrier (36, 37) of the first component (30) at a second frequency is omitted and the second component (31) comprises a subcarrier (34, 35) at the second frequency.

16. The signal according to claim 13, wherein the magnitude of the subcarrier (32, 33) of the first component (30) at the first frequency is different to the magnitude of other subcarriers of the first component (30).

**Patentansprüche**

1. Ein Empfänger für ein optisches OFDM-Übertragungssystem, wobei

- der Empfänger konfiguriert ist, um ein polarisationsgemultiplextes OFDM-Signal mit einer ersten (30) und einer zweiten (31) Komponente im selben Frequenzband zu empfangen, wobei sich die Polarisation der ersten Komponente (30) von der Polarisation der zweiten Komponente (31) unterscheidet, wobei ein Hilfsträger (38, 39) der zweiten Komponente bei einer ersten Frequenz unberücksichtigt bleibt und die erste Komponente (30) einen Hilfsträger (32, 33) bei der ersten Frequenz umfasst,
- wobei der Empfänger umfasst:

- Splittingmittel (5) zum Splitten des OFDM-Signals in eine erste optische Welle und eine zweite optische Welle, wobei sich die Polarisation der ersten optischen Welle von der Polarisation der zweiten optischen Welle unterscheidet;
- Einstellbare Kompensationsmittel (16, 16', 16'', 16''') zum Kompensieren einer Polarisationsfehlanpassung zwischen den Polarisationen der optischen Wellen und der Komponenten; und
- Einstellmittel zum Einstellen der einstellbaren Kompensationsmittel auf der Basis des empfangenen Signals bei der ersten Frequenz.

2. Der Empfänger nach Anspruch 1, wobei die Einstellmittel für die Maximierung des empfangenen Hilfsträger bei der ersten Frequenz konfiguriert sind.

**3.** Der Empfänger nach Anspruch 1, wobei ein Hilfsträger (36, 37) der ersten Komponente (30) bei einer zweiten Frequenz unberücksichtigt bleibt und die zweite Komponente (31) einen Hilfsträger (34, 35) bei der zweiten Frequenz umfasst.

**4.** Der Empfänger nach Anspruch 1,

- wobei der Empfänger weiterhin umfasst:

- erste Überlagerungsmittel (6) zum Überlagern des Signals der ersten optischen Welle mit einem lokalen optischen Oszillatorsignal, wodurch ein erstes überlagertes Signal erzeugt wird;
- zweite Überlagerungsmittel (7) zum Überlagern des Signals der zweiten optischen Welle mit dem lokalen optischen Oszillatorsignal, wodurch ein zweites überlagertes Signal erzeugt wird;
- erste Mittel zum Umwandeln eines optischen Signals in ein elektrisches Signal (10, 11) zum Erzeugen eines ersten elektrischen Signals auf der Basis des ersten überlagerten Signals;
- zweite Mittel zum Umwandeln eines optischen Signals in ein elektrisches Signal (12, 13) zum Erzeugen eines zweiten elektrischen Signals auf der Basis des zweiten überlagerten Signals; und

- wobei die einstellbaren Kompensationsmittel (16, 16', 16", 16"') umfassen:

- erste Kombinierungsmittel zum gewichteten Kombinieren des ersten und des zweiten elektrischen Signals, oder zum gewichteten Kombinieren von davon abhängigen Signalen, wobei die Gewichtung von den Einstellmitteln eingestellt wird; und
- zweite Kombinlerungsmittel zum gewichteten Kombinieren des ersten und des zweiten elektrischen Signals, oder zum gewichteten Kombinieren von davon abhängigen Signalen, wobei die Gewichtung von den Einstellmitteln eingestellt wird.

**5.** Ein Sender (1, 2, 3) für ein optisches OFDM-Übertragungssystem, wobei der Sender konfiguriert ist, um ein polarisationsgemultiplextes OFDM-Signal mit einer ersten (30) und einer zweiten (31) Komponente im selben Frequenzband zu erzeugen, wobei sich die Polarisation der ersten Komponente (30) von der Polarisation der zweiten Komponente (31) unterscheidet,
**dadurch gekennzeichnet, dass**
ein Hilfsträger (38, 39) der zweiten Komponente bei einer ersten Frequenz unberücksichtigt bleibt und die erste Komponente (30) einen Hilfsträger (32, 33) bei der ersten Frequenz umfasst.

**6.** Der Sender nach Anspruch 5, wobei der Hilfsträger (32, 33) der ersten Komponente (30) bei der ersten Frequenz ein Pilot-Hilfsträger ist.

**7.** Der Sender nach Anspruch 5, wobei ein Hilfsträger (36, 37) der ersten Komponente (30) bei einer zweiten Frequenz unberücksichtigt bleibt und die zweite Komponente (31) einen Hilfsträger (34, 35) bei der zweiten Frequenz umfasst.

**8.** Der Sender nach Anspruch 5, wobei sich die Größe des Hilfsträgers (32, 33) der ersten Komponente (30) bei der ersten Frequenz von der Größe anderer Hilfsträger der ersten Komponente (30) unterscheidet.

**9.** Ein Verfahren zum Erzeugen eines polarisationsgemultiplexten OFDM-Signals mit einer ersten (30) und einer zweiten (31) Komponente im selben Frequenzband, wobei sich die Polarisation der ersten Komponente (30) von der Polarisation der zweiten Komponente (31) unterscheidet,
**dadurch gekennzeichnet, dass**
ein Hilfsträger (38, 39) der zweiten Komponente (31) bei einer ersten Frequenz unberücksichtigt bleibt und die erste Komponente (30) einen Hilfsträger (32, 33) bei der ersten Frequenz umfasst.

**10.** Das Verfahren nach Anspruch 9, wobei der Hilfsträger (32, 33) der ersten Komponente (30) bei der ersten Frequenz ein Pilot-Hilfsträger ist.

**11.** Das Verfahren nach Anspruch 9, wobei ein Hilfsträger (36, 37) der ersten Komponente (30) bei einer zweiten Frequenz unberücksichtigt bleibt und die zweite Komponente (31) einen Hilfsträger (34, 35) bei der zweiten Frequenz umfasst.

**12.** Das Verfahren nach Anspruch 9, wobei sich die Größe des Hilfsträgers (32, 33) der ersten Komponente (30) bei der ersten Frequenz von der Größe anderer Hilfsträger der ersten Komponente (30) unterscheidet.

**13.** Ein polarisationsgemultiplextes OFDM-Signal mit einer ersten (30) und einer zweiten (31) Komponente im selben Frequenzband, wobei sich die Polarisation der ersten Komponente (30) von der Polarisation der zweiten Komponente (31) unterscheidet,
**dadurch gekennzeichnet, dass**
ein Hilfsträger (38, 39) der zweiten Komponente (31) bei einer ersten Frequenz unberücksichtigt bleibt und die erste Komponente (30) einen Hilfsträger (32, 33) bei der ersten Frequenz umfasst.

**14.** Das Signal nach Anspruch 13, wobei der Hilfsträger (32, 33) der ersten Komponente (30) bei der ersten Frequenz ein Pilot-Hilfsträger ist.

**15.** Das Signal nach Anspruch 13, wobei ein Hilfsträger (36, 37) der ersten Komponente (30) bei einer zweiten Frequenz unberücksichtigt bleibt und die zweite Komponente (31) einen Hilfsträger (34, 35) bei der zweiten Frequenz umfasst.

**16.** Das Signal nach Anspruch 13, wobei sich die Größe des Hilfsträgers (32, 33) der ersten Komponente (30) bei der ersten Frequenz von der Größe anderer Hilfsträger der ersten Komponente (30) unterscheidet.

**Revendications**

**1.** Récepteur pour un système de transmission OFDM optique,

- le récepteur étant configuré pour recevoir un signal OFDM multiplexé à polarisation comprenant une première (30) et une deuxième (31) composante dans la même bande de fréquences, la polarisation de la première composante (30) étant différente de la polarisation de la deuxième composante (31), une sous-porteuse (38, 39) de la deuxième composante (31) à une première fréquence étant ignorée et la première composante (30) comprenant une sous-porteuse (32, 33) à la première fréquence,
- le récepteur comprenant :

  - moyens de fractionnement (5) pour fractionner le signal OFDM en une première onde optique et une deuxième onde optique, la polarisation de la première onde optique étant différente de la polarisation de la deuxième onde optique ;
  - moyens de compensation réglables (16, 16', 16", 16"') pour compenser la désadaptation de polarisation entre les polarisations des ondes optiques et des composantes ; et
  - moyens de réglage pour régler les moyens de compensation réglables en se basant sur le signal reçu à la première fréquence.

**2.** Récepteur selon la revendication 1, les moyens de réglage étant configurés pour optimiser la sous-porteuse reçue à la première fréquence.

**3.** Récepteur selon la revendication 1, une sous-porteuse (36, 37) de la première composante (30) à une deuxième fréquence étant ignorée et la deuxième composante (31) comprenant une sous-porteuse (34, 35) à la deuxième fréquence.

**4.** Récepteur selon la revendication 1,

  - le récepteur comprenant en outre :

    - premiers moyens de superposition (6) pour superposer le signal de la première onde optique avec le signal d'un oscillateur local optique, générant ainsi un premier signal superposé ;
    - deuxièmes moyens de superposition (7) pour superposer le signal de la deuxième onde optique avec le signal de l'oscillateur local optique, générant ainsi un deuxième signal superposé ;
    - premiers moyens convertisseurs optoélectriques (10, 11) pour générer un premier signal électrique basé sur le premier signal superposé ;
    - deuxièmes moyens convertisseurs optoélectriques (12, 13) pour générer un deuxième signal électrique basé sur le deuxième signal superposé ; et

- les moyens de compensation réglables (16, 16', 16'', 16''') comprenant :

- premiers moyens de combinaison pour effectuer une combinaison pondérée des premier et deuxième signaux électriques ou pour effectuer une combinaison pondérée des signaux qui en dépendent, la pondération étant réglée par les moyens de réglage ; et
- deuxièmes moyens de combinaison pour effectuer une combinaison pondérée des premier et deuxième signaux électriques ou pour effectuer une combinaison pondérée des signaux qui en dépendent, la pondération étant réglée par les moyens de réglage.

5. Émetteur (1, 2, 3) pour un système de transmission OFDM optique, l'émetteur étant configuré pour générer un signal OFDM multiplexé à polarisation comprenant une première (30) et une deuxième (31 ) composante dans la même bande de fréquences, la polarisation de la première composante (30) étant différente de la polarisation de la deuxième composante (31),
**caractérisé en ce que**
une sous-porteuse (38, 39) de la deuxième composante à une première fréquence est ignorée et la première composante (32) comprend une sous-porteuse (32, 33) à la première fréquence.

6. Émetteur selon la revendication 5, la sous-porteuse (32, 33) de la première composante (30) à la première fréquence étant une sous-porteuse pilote.

7. Émetteur selon la revendication 5, une sous-porteuse (36, 37) de la première composante (30) à une deuxième fréquence étant ignorée et la deuxième composante (31) comprenant une sous-porteuse (34, 35) à la deuxième fréquence.

8. Émetteur selon la revendication 5, l'amplitude de la sous-porteuse (32, 33) de la première composante (30) à la première fréquence étant différente de l'amplitude des autres sous-porteuses de la première composante (30).

9. Procédé pour générer un signal OFDM multiplexé à polarisation comprenant une première (30) et une deuxième (31) composante dans la même bande de fréquences, la polarisation de la première composante (30) étant différente de la polarisation de la deuxième composante (31),
**caractérisé en ce que**
une sous-porteuse (38, 39) de la deuxième composante (31) à une première fréquence est ignorée et la première composante (30) comprend une sous-porteuse (32, 33) à la première fréquence.

10. Procédé selon la revendication 9, la sous-porteuse (32, 33) de la première composante (30) à la première fréquence étant une sous-porteuse pilote.

11. Procédé selon la revendication 9, une sous-porteuse (36, 37) de la première composante (30) à une deuxième fréquence étant ignorée et la deuxième composante (31) comprenant une sous-porteuse (34, 35) à la deuxième fréquence.

12. Procédé selon la revendication 9, l'amplitude de la sous-porteuse (32, 33) de la première composante (30) à la première fréquence étant différente de l'amplitude des autres sous-porteuses de la première composante (30).

13. Signal OFDM multiplexé à polarisation comprenant une première (30) et une deuxième (31) composante dans la même bande de fréquences, la polarisation de la première composante (30) étant différente de la polarisation de la deuxième composante (31),
**caractérisé en ce que**
une sous-porteuse (38, 39) de la deuxième composante (31) à une première fréquence est ignorée et la première composante (30) comprend une sous-porteuse (32, 33) à la première fréquence.

14. Signal selon la revendication 13, la sous-porteuse (32, 33) de la première composante (30) à la première fréquence étant une sous-porteuse pilote.

15. Signal selon la revendication 13, une sousporteuse (36, 37) de la première composante (30) à une deuxième fréquence étant ignorée et la deuxième composante (31) comprenant une sous-porteuse (34, 35) à la deuxième fréquence.

16. Signal selon la revendication 13, l'amplitude de la sous-porteuse (32, 33) de la première composante (30) à la première fréquence étant différente de amplitude des autres sous-porteuses de la première composante (30).

Fig. 1

EP 2 071 754 B1

Fig. 2

Fig. 3

Fig. 4

OFDM specta

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005286904 A1

**Non-patent literature cited in the description**

- **Ezra Ip et al.** Coherent Detection in Optical Fiber Systems. Optical Society of America, 17 August 2007
- **W. Shieh et al.** Theoretical and experimental study on PMD-supported transmission using polarization diversity in coherent optical OFDM systems. *Optics Express,* 06 August 2007, vol. 15 (16
- **W. Shie et al.** Polarization mode dispersion mitigation in coherent optical orthogonal frequency division multiplexed systems. *Electronic Letters, IEE Stevenage, GB,* 17 August 2006, vol. 42 (17), 996-997
- **J.-M. P. Delavaux et al.** All-Fibre Optical Hybrid for Coherent Polarization Diversity Receivers. *Electronic Letters, IEE Stevenage, GB,* 02 August 1990, vol. 26 (16), 1303-1305